# EUROPEAN PATENT SPECIFICATION

(11) **EP 3 546 290 B1**
(45) Date of publication and mention of the grant of the patent: **15.07.2020**
(21) Application number: 19157658.6
(22) Date of filing: 18.02.2019
(51) Int. Cl.: B60Q 1/34, B60Q 1/38, F21V 8/00, F21S 43/239, F21S 43/245, F21S 43/249, F21W 103/20, F21S 43/14

(54) **ILLUMINATION DEVICE**
BELEUCHTUNGSVORRICHTUNG
DISPOSITIF D'ÉCLAIRAGE

(30) Priority: 30.03.2018 JP 2018068779
(43) Date of publication of application: 02.10.2019
(73) Proprietor: Toyoda Gosei Co., Ltd., Kiyosu-shi, Aichi 452-8564 (JP)
(72) Inventor: KURAMITSU, Yuhki, Kiyosu-shi, Aichi 452-8564 (JP); TANAKA, Yoshiharu, Kiyosu-shi, Aichi 452-8564 (JP); FUKUI, Hirotaka, Kiyosu-shi, Aichi 452-8564 (JP); ASAKAWA, Renge, Kiyosu-shi, Aichi 452-8564 (JP)
(74) Representative: Kramer Barske Schmidtchen Patentanwälte PartG mbB

(56) References cited:
- EP-A1- 3 012 152
- WO-A1-2017/033820
- DE-A1-102012 222 684
- DE-A1-102013 101 198
- JP-A- 2014 229 510
- US-A1- 2015 008 840

## Description

### TECHNICAL FIELD

The present invention relates to an illumination device comprising a light guider, and at least two light sources.

### BACKGROUND ART

A known illumination device involves vehicular devices comprising a large number of arrayed light sources, for instance. Japanese Unexamined Patent Publication (KOKAI) Gazette No. 2012-96564 and Japanese Unexamined Patent Publication (KOKAI) Gazette No. 2012-17063, for example, disclose a conventional illumination device comprising a plurality of light sources arrayed in a predetermined direction, respectively. The light sources are turned on or turned off sequentially in the arrayed direction, thereby showing light so as to move along in the arrayed direction of the light sources. This kind of an illumination device is believed to be useful for turn signals, or for vehicular interior illuminations, for instance.

Such a type of conventional illumination devices is capable of displaying good decorative designs. On the other hand, however, the conventional illumination devices have been posing a problem in that they are less likely to be manufactured inexpensively, because they need a large number of light sources and require controlling the respective multiple light sources to turn on and turn off independently of each other.

Another technique using a light guider, instead of a large number of light sources, has been proposed. Japanese Patent Publication Gazette No. 6091096 discloses a technique in which a light source 3A is arranged at one of the opposite ends of a light guider in the longitudinal direction and a light source 3B is arranged at the other one of the opposite ends. The gazette discloses to turn on the second light source 3B, one of the two light sources, after turning on the first light source 3A, the other one of them; to turn off the first light source 3A after turning on the second light source 3B; and further to turn off the second light source 3B after turning off the first light source 3A. The thus controlled first light source 3A and second light source 3B first shine the light guider brightly only on a side at one of the opposite ends in the longitudinal direction; subsequently shine it brightly over the entire length in the longitudinal direction; then shine it brightly only on another side at the other of one of the opposite ends; and finally darken it over the entire length in the longitudinal direction. Therefore, this sort of illumination device makes light viewable as if it moves from a side at one of the opposite ends of the light guider in the longitudinal direction toward the other side at the other one of opposite ends.

The conventional illumination device using the light guider produces an advantage of allowing the reduction of costs, because a small number of the light sources permit expressing the movement of light. However, it has been desired to develop techniques allowing further upgrading the decorativeness of illumination devices, because providing them with various decorative designs has been required recently.

DE 10 2012 222 684 A1, WO 2017/033820 A1, and US 2015/0008840 A1 disclose further illumination devices.

### SUMMARY OF THE INVENTION

The present invention has been developed in view of the above-described circumstances. It is therefore an object of the present invention to provide an illumination device with good decorativeness.

An illumination device according to the present invention achieving the above-described object is an illumination device according to claim 1.

The illumination device according to the present invention is of good decorativeness.

### BRIEF DESCRIPTION OF THE DRAWINGS

A more complete appreciation of the present invention and many of its advantages will be readily obtained as the same becomes better understood by reference to the following detailed description when considered in connection with the accompanying drawings and detailed specification, all of which forms a part of the disclosure.
Fig. 1 is an explanatory diagram for schematically illustrating an illumination device according to a first example not forming part of the invention.
Fig. 2 is an explanatory diagram for schematically illustrating a light guider of an illumination device according to fig. 1.
Fig. 3 is an explanatory diagram for describing how a first light source and a second light source are controlled.
Fig. 4 is an explanatory diagram for schematically illustrating another configuration of a light guider making an illumination device
Fig. 5 is an explanatory diagram for schematically illustrating an even further configuration of a light guider making an illumination device
Fig. 6 is an explanatory diagram for schematically illustrating a light guider making an illumination device according to the present invention.
Fig. 7 is an enlarged diagram for illustrating a major part of the light guider shown in Fig. 6. DETAILED DESCRIPTION OF THE PREFERRED EMBODIMENTS

Having generally described the present invention, a further understanding can be obtained by reference to the specific preferred embodiments which are provided herein for the purpose of illustration only and not intended to limit the scope of the appended claims.

An illumination device according to the present invention comprises a light guider, a first light source, and a second light source.

The light guider satisfactorily has a long-length configuration extending in the longitudinal direction, but its cross-sectional configuration is not limited at all especially. For example, the light guider also satisfactorily has a rectangular cross section, or even adequately has a circular cross section, or also satisfactorily has the other cross-sectional configurations, when being cut in a direction perpendicularly to the longitudinal direction. In the present specification, a cross section that the light guider has when being cut in a direction perpendicular to the longitudinal direction will be hereinafter abbreviated to as a "cross-section of the light guider, "unless descriptions are made otherwise in particular. The light guider according to the invention has a cross section that is not constant along the longitudinal direction.

The light guider is satisfactorily made up of a transparent or semi-transparent material because it is necessary to transmit light through it. The light guider also satisfactorily exhibits flexibility, or even adequately exhibits rigidity. Specifically, an exemplifiable material for the light guider involves fluorine resins, polymethyl methacrylate (or PMMA) resins, polycarbonate (or PC) resins, cyclic polyolefin (or COP) resins, acrylic resins, and glass materials.

The light guider has a first end, a second end, a front face, and a back face. The first end is one of the opposite ends of the light guider in the longitudinal direction. The second end is another one of the opposite ends of the light guider in the longitudinal direction. That is, the longitudinal direction in the light guider according to the present invention coincides with the direction from the first end to the second end, or the first end/second end direction. It is possible to paraphrase the term, the longitudinal direction in the light guider, as an "axis-line direction in the light guider." The light guider also satisfactorily has a linear shape, or even adequately has a curved or bent shape. Therefore, the longitudinal direction in the light guider also satisfactorily extends linearly, or even adequately extends in a curved manner, or also satisfactorily extends in a bent manner.

The first light source irradiates the first end with light, and the second light source irradiates the second end with the light. The light, which impinges on the first end and then enters the light guider, travels from the first end toward the second end as a whole while being reflected inside the light guider. In the present specification, the light-traveling direction directed from the first end toward the second end is referred to as a "first light-traveling direction." It is also possible to paraphrase the first light-traveling direction as an "axis-line direction in the light guider" directed from the first end toward the second end.

Meanwhile, the light, which impinges on the second end and then enters the light guider, travels from the second end toward the first end as a whole while being reflected inside the light guider. In the present specification, the light-traveling direction directed from the second end toward the first end is referred to as a "second light-traveling direction." It is also possible to paraphrase the second light-traveling direction as an "axis-line direction in the light guider" directed from the second end toward the first end.

The front face and back face of the light guider face back-to-back one another. The light guider is installed with the front face directed to the front side, and with the back face directed to the rear side. The term, the front side referred to herein, is a side intended to display a light-induced decorative design for which the illumination device according to the present invention is used, and is one of the opposite sides of the present illumination device that is visible to people. In contrast, the back side of the present illumination device is another one of the opposite sides that is invisible to people. Note that, in the present specification, the term, the front/rear direction, implies a "direction connecting between the above-mentioned front side and rear side."

As described later, the back face has an irregular or undulating configuration, and the front face is a flat-and-smooth face. Therefore, the back face has a function of serving as a reflective face that reflects the light entering the light guider, and the front face has a function of serving as an outgoing face from which the light reflected off the back face goes out. Note that the front face satisfactorily makes a flat-and-smooth face, or also satisfactorily makes a flat face, or even adequately makes a curved face. The term, the flat-and-smooth face, implies flat faces whose surface roughness Rₐ is 10 *µ* m or less.

The back face includes a first region located on a side of the first end, and a second region located on a side of the second end. It is also possible to say that the first region is a portion of the back face in the light guider, which is located on a side of the first light source, and the second region is another portion of the back face in the light guider, which is located on a side of the second light source.

Of the two regions, the first region has an irregular or undulating configuration in which first reflective faces and first non-reflective faces are made one after another in succession alternately. The first reflective faces and first non-reflective faces are faces that intersect the light-traveling direction directed from the first end toward the second end, namely, the already-descried first light-traveling direction. The first reflective faces intersect the first light-travelling direction at an intersecting angle *θ* _{1R}; the first non-reflective faces intersect the first light-traveling direction at an intersecting angle *θ* _{1N}; and the intersecting angle *θ* _{1N} exhibits an angle that is larger than the intersecting angle *θ* _{1R}. Therefore, the first reflective faces have a function of reflecting the light, which travels in the first light-traveling direction within the light guider, to the front side, more specifically, reflecting the light toward a side of the front face of the light guider. Meanwhile, it is possible to say that the first non-reflective faces are directed in a direction in which they are less likely to interfere with the light traveling in the first light-traveling direction within the light guider. Therefore, most of the light traveling in the first light-traveling direction within the light guider goes out to the front side of the light guider through the front face while being reflected off the first reflective faces.

Note that the first reflective faces preferably intersect the first light-traveling direction at an intersecting angle of 90 deg. or less, more preferably intersect it at an acute angle (i.e., less than 90 deg.). Moreover, the first non-reflective faces preferably intersect the first light-traveling direction at an intersecting angle of 80 deg. or more, more preferably intersect it at an obtuse angle.

The second region has an irregular or undulating configuration in which second reflective faces and second non-reflective faces are made one after another in succession alternately. The second reflective faces and second non-reflective faces are faces that intersect the light-traveling direction directed from the second end toward the first end, namely, the already-descried second light-traveling direction. The second reflective faces intersect the second light-travelling direction at an intersecting angle *θ* _{2R}; the second non-reflective faces intersect the second light-traveling direction at an intersecting angle *θ* _{2N}; and the intersecting angle *θ* _{2N} exhibits an angle that is larger than the intersecting angle *θ* _{2R}. Therefore, the second reflective faces have a function of reflecting the light, which travels in the second light-traveling direction within the light guider, to the front side, more specifically, reflecting the light toward a side of the front face of the light guider. Meanwhile, the second non-reflective faces are less likely to interfere with the light traveling in the second light-traveling direction within the light guider. Therefore, most of the light traveling in the second light-traveling direction within the light guider goes out to the front side of the light guider through the front face while being reflected off the second reflective faces.

Note that the second reflective faces preferably intersect the second light-traveling direction at an intersecting angle of 90 deg. or less, more preferably intersect it at an acute angle (i.e., less than 90 deg.). Moreover, the second non-reflective faces preferably intersect the second light-traveling direction at an intersecting angle of 80 deg. or more, more preferably intersect it at an obtuse angle.

The illumination device according to the present invention satisfies any of followingRequirements (I) through (III) :
(I) the light guider involves a first designated installation direction making a normal direction in which the longitudinal direction intersects a front/rear direction perpendicularly;
   the first reflective faces intersect the first light-traveling direction at an intersecting angle *θ* _{1R}, the second reflective faces intersect the second light-traveling direction at an intersecting angle *θ* _{2R}, and each of the intersecting angles *θ* _{1R} and *θ* _{2R} falls within a range of from 30 deg. to 60 deg.; and
   the first non-reflective faces intersect the first light-traveling direction at an intersecting angle *θ* _{1N}, the second non-reflective faces intersect the second light-traveling direction at an intersecting angle *θ* _{2N}, and each of the intersecting angles *θ* _{1N} and *θ* _{2N} falls within a range of from 90 deg. to 130 deg.;
(II) the light guider involves a second designated installation direction making a first inclination direction in which the first end is located more rearward than the second end is located;
   the front face intersects a front-face direction, which crosses the front/rear direction perpendicularly, at an intersecting angle *θ* ₀;
   an intersecting angle *θ* _{1R} at which the first reflective faces intersect the first light-traveling direction falls within a range of from (50 - *θ* ₀) deg. to (80 - *θ* ₀) deg.;
   an intersecting angle *θ* _{2R} at which the second reflective faces intersect the second light-traveling direction falls within a range of from (10 + *θ* ₀) deg. to (50 + *θ* ₀) deg.;
   an intersecting angle *θ* _{1N} at which the first non-reflective faces intersect the first light-traveling direction falls within a range of from 80 deg. to (160 - *θ* ₀) deg.; and
   an intersecting angle *θ* _{2N} at which the second non-reflective faces intersect the second light-traveling direction falls within a range of from 80 deg. to (120 + *θ* ₀) deg.; and
(III) the light guider involves a third designated installation direction making a second inclination direction in which the second end is located more rearward than the first end is located;
   the front face intersects a front-face direction, which crosses the front/rear direction perpendicularly, at an intersecting angle *θ* ₀;
   an intersecting angle *θ* _{2R} at which the second reflective faces intersect the second light-traveling direction falls within a range of from (50 - *θ* ₀) deg. to (80 - *θ* ₀) deg.;
   an intersecting angle *θ* _{1R} at which the first reflective faces intersect the first light-traveling direction falls within a range of from (10 + *θ* ₀) deg. to (50 + *θ* ₀) deg.;
   an intersecting angle *θ* _{2N} at which the second non-reflective faces intersect the second light-traveling direction falls within a range of from 80 deg. to (160 - *θ* ₀) deg.; and
   an intersecting angle *θ* _{1N} at which the first non-reflective faces intersect the first light-traveling direction falls within a range of from 80 deg. to (120 + *θ* ₀) deg.

Requirement (I) above relates to a case in which the illumination device according to the present invention comprises the light guider with the first designated installation direction making the normal or ordinary direction in which the longitudinal direction crosses the front/rear direction perpendicularly. Requirement (II) above relates to another case in which the present illumination device comprises the light guider with the second designated installation direction making the first inclination direction in which the first end is located more rearward than the second end is located. Requirement (III) above relates to still another case in which the present illumination device comprises the light guider with the third designated installation direction making the second inclination direction in which the second end is located more rearward than the first end is located.

As having described already, the light traveling in the first light-traveling direction goes out to the front side of the light guider through the front face while being reflected off the first reflective faces. Moreover, the light traveling in the second light-traveling direction goes out to the front side of the light guider through the front face while being reflected off the second reflective faces. Therefore, the intersecting angle *θ* _{1R}, at which the first reflective faces intersect the first light-traveling direction, and the intersecting angle *θ* _{2R}, at which the second reflective faces intersect the second light-traveling direction, contribute greatly to the reflection directions of the light, and eventually to the directions of the outgoing light leaving the light guider.

Note herein that the light guider does not necessarily need to involve any direction of from the front face to the back face (or any front face/back face direction) that coincides with the front/rear direction, although the light guider is supposed to be installed with the front face directed forward and with the back face directed rearward. In other words, the longitudinal direction in the light guider also satisfactorily cross the front/rear direction perpendicularly, or even adequately inclines to the front/rear direction. When further rephrasing the expression, the light guider is also satisfactorily installed with the front face directed forward straight or directly, or is even adequately installed with the front face directed forward obliquely or sideways. Therefore, the designated installation direction of the illumination device according to the present invention is believed to involve such three directions as the normal direction in Requirement (I) above; the first inclination direction in Requirement (II) above; and the second inclination direction in Requirement (III) above.

In order for an illumination device to vividly display a decorative design, it is necessary to direct the outgoing light leaving the light guider toward people who view the illumination device. Since the illumination device according to the present device is supposed to display a decorative design toward people who are in front of the present illumination device, the back face needs to reflect the light. For this reason, it is believed that the intersecting angle *θ* _{1R} at which the first reflective faces intersect the first light-traveling direction; the intersecting angle *θ* _{2R} at which the second reflective faces intersect the second light-traveling direction; the intersecting angle *θ* _{1N} at which the first non-reflective faces intersect the first light-traveling direction; and the intersecting angle *θ* _{2N} at which the second non-reflective faces intersect the second light-traveling direction differ from each other in the suitable magnitudes between the cases where the designated installation direction of the light guider makes (i) the normal direction; (ii) the first inclination direction; and (iii) the second inclination direction.

In whichever designated installation directions the light guider is installed, dividing the designated installation direction of the light guider into three cases (i) the normal direction, (ii) the first inclination direction and (iii) the second inclination direction, and then setting up ranges of the respective intersecting angle *θ* _{1R}, intersecting angle *θ* _{2R}, intersecting angle *θ* _{1N} and intersecting angle *θ* _{2N} for each of the three divided cases enable the illumination device according to the present invention to display good decorative designs.

Moreover, setting up the ranges of the intersecting angle *θ* _{1R}, intersecting angle *θ* _{2R}, intersecting angle *θ* _{1N} and intersecting angle *θ* _{2N} in the above-described respective ranges allows directing the reflected light coming from the first reflective faces and second reflective faces to the front side of the illumination device according to the present invention. Therefore, the present illumination device is able to display better decorative designs.

The intersecting angle *θ* _{1R}, intersecting angle *θ* _{2R}, intersecting angle *θ* _{1N} and intersecting angle *θ* _{2N} are preferably set up as described below.

When the illumination device according to the present invention satisfies Requirement (I), preferably, each of the intersecting angle *θ* _{1R} and intersecting angle *θ* _{2R} falls within a range of from 40 deg. to 50 deg., and each of the intersecting angle *θ* _{1N} and intersecting angle *θ* _{2N} falls within a range of from 90 deg. to 130 deg. More preferably, each of the intersecting angle *θ* _{1R} and intersecting angle *θ* _{2R} falls within a range of from 42 deg. to 48 deg., and each of the intersecting angle *θ* _{1N} and intersecting angle *θ* _{2N} falls within a range of from 95 deg. to 120 deg.

In particular, each of the intersecting angle *θ* _{1R} and intersecting angle *θ* _{2R} falling within a range of from 40 deg. to 50 deg. is advantageous for shining the light guider integrally in the longitudinal direction upon turning on the first light source and second light source simultaneously.

When the illumination device according to the present invention satisfies Requirement (II), preferably, the intersecting angle *θ* _{1R} falls within a range of from 5 deg. to 40 deg. , the intersecting angle *θ* _{2R} falls within a range of from 50 deg. to 90 deg., the intersecting angle *θ* _{1N} falls within a range of from 80 deg. to 120 deg., and the intersecting angle *θ* _{2N} falls within a range of from 110 deg. to 170 deg. More preferably, the intersecting angle *θ* _{1R} falls within a range of from 5 deg. to 35 deg., the intersecting angle *θ* _{2R} falls within a range of from 55 deg. to 85 deg., the intersecting angle *θ* _{1N} falls within a range of from 85 deg. to 110 deg., and the intersecting angle *θ* _{2N} falls within a range of from 115 deg. to 165 deg.

Inparticular, the intersecting angle *θ* _{1R} falling within a range of from 5 deg. to 40 deg., and the intersecting angle *θ* _{2R} falling within a range of from 50 deg. to 90 deg. are advantageous for shining the light guider integrally in the longitudinal direction upon turning on the first light source and second light source simultaneously.

Moreover, the intersecting angle *θ* _{1R} falling within a range of from 5 deg. to 40 deg. is advantageous for reflecting the light traveling in the first light-traveling direction to the front side. Therefore, the intersecting angle *θ* _{1R} thus set up enables an amount of the light reaching people on the front side of the illumination device according to the present invention to enlarge when the light guider is installed in the first inclination direction, namely, even when the light guider is installed obliquely or sideways to people on the front side of the present illumination device.

When the illumination device according to the present invention satisfies Requirement (III), preferably, the intersecting angle *θ* _{2R} falls within a range of from 5 deg. to 40 deg., the intersecting angle *θ* _{1R} falls within a range of from 50 deg. to 90 deg., the intersecting angle *θ* _{2N} falls within a range of from 80 deg. to 120 deg., and the intersecting angle *θ* _{1N} falls within a range of from 110 deg. to 170 deg. More preferably, the intersecting angle *θ* _{2R} falls within a range of from 5 deg. to 35 deg., the intersecting angle *θ* _{1R} falls within a range of from 55 deg. to 85 deg., the intersecting angle *θ* _{2N} falls within a range of from 85 deg. to 110 deg., and the intersecting angle *θ* _{1N} falls within a range of from 115 deg. to 165 deg.

Inparticular, the intersecting angle *θ* _{2R} falling within a range of from 5 deg. to 40 deg., and the intersecting angle *θ* _{1R} falling within a range of from 50 deg. to 90 deg. are advantageous for shining the light guider integrally in the longitudinal direction upon turning on the first light source and second light source simultaneously.

Moreover, the intersecting angle *θ* _{2R} falling within a range of from 5 deg. to 40 deg. is advantageous for reflecting the light traveling in the second light-traveling direction to the front side. Therefore, the intersecting angle *θ* _{2R} thus set up enables an amount of the light reaching people on the front side of the illumination device according to the present invention to enlarge even when the light guider is installed in the second inclination direction, that is, it is installed obliquely or sideways to people on the front side of the present illumination device.

An illumination device not forming part of the invention may comprise a light guider whose thickness, that is, whose length in the direction of from the front face to the back face (or in the front face/back face direction), is also satisfactorily constant over the longitudinal direction, or is even adequately different for every part of it.

Incidentally, the light guider has a longitudinal middle that might appear darker than the opposite ends appear, because an amount of light is likely to be deficient at the longitudinal middle. Hereinafter, the term, the longitudinal middle in the light guider will be simply referred to as "a middle in the light guider," if needed.

The illumination device according to the invention comprises a light guider with a thickness, which is thinner at the middle in the light guider than on the sides of the first end and second end, enhances the density of light supplied to the middle in the light guider. Consequently, the light guider thus constructed has an advantage in that the middle in the light guider shines much brighter than the not-thinned out middle does.

When the light guider has a thickness that is thinner at the middle than on the sides of the first end and second end, their sectional thicknesses are satisfactorily set up at the middle in the light guider as well as at the first end and second end appropriately. However, setting the thickness at the middle in the light guider so as to fall in a range of from 95% to 45% of the thicknesses at the first end and second end allows effectively enhancing the density of light supplied to the middle in the light guider. The middle in the light guider more preferably has the sectional thickness that is from 90% to 50% of the sectional thicknesses of the first end and second end, and much more preferably has the sectional thickness that is from 80% to 60% of the sectional thicknesses of the first end and second end.

In particular, the light guider, whose middle has a sectional thickness that is from 90% to 50% of the sectional thicknesses of the first end and second end, gets bright at the middle to such an extent as it gets bright at the first end and second end upon turning on the first light source and second light source simultaneously, making the brightness of the light guider uniform in the longitudinal direction. That is, the thus constructed light guider appears to shine integrally in the longitudinal direction.

It does not matter how long the above-described middle is in the longitudinal direction of the light guider. However, the illumination device according to the present invention comprises the light guider having the middle whose sectional thickness makes from 95% to 45% of the sectional thicknesses of the first end and second end, and whose length is preferably set at 1/10 or more, or more preferably at 1/5 or more, or much more preferably at 1/3 or more, of an overall length that the light guider has in the longitudinal direction.

In order to give good decorative designs to the illumination device according to the present invention, it is believed to be preferable to shine the light guider uniformly in the longitudinal direction. In order that the light guider shines uniformly in the longitudinal direction, it is believed to be preferable that intervals between the neighboring first reflective faces, intervals between the neighboring first non-reflective faces, intervals between the neighboring second reflective faces, and intervals between the neighboring second non-reflective faces are set to fall within an appropriate range, respectively.

Specifically, between the neighboring first reflective faces, preferable intervals are more than 0 mm and 2 mm or less, or more preferable intervals are more than 0 mm and 1mm or less, or much more preferable intervals are more than 0 mm and 0.5 mm or less. Moreover, between the neighboring first non-reflective faces, preferable intervals are more than 0 mm and 2 mm or less, or more preferable intervals are more than 0 mm and 1 mm or less, or much more preferable intervals are more than 0mm and 0.5 mm or less. In addition, between the neighboring second reflective faces, preferable intervals are more than 0 mm and 2 mm or less, or more preferable intervals are more than 0 mm and 1 mm or less, or much more preferable intervals are more than 0 mm and 0.5 mm or less. Moreover, between the neighboring second non-reflective faces, preferable intervals are more than 0 mm and 2 mm or less, or more preferable intervals are more than 0 mm and 1mm or less, or much more preferable intervals are more than 0 mm and 0.5 mm or less.

The intervals between the neighboring first reflective faces and/or the intervals between the neighboring first non-reflective faces, which fall in any of the aforementioned ranges, are advantageous for making the light guider exhibit a uniform luminance or brilliance at the section on the first-end side in the longitudinal direction, because the light guider reflects the light traveling in the first light-traveling direction within the light guider toward the front side at relatively short intervals. Likewise, the intervals between the neighboring second reflective faces and/or the intervals between the neighboring second non-reflective faces, which fall in any of the aforementioned ranges, are advantageous for making the light guider exhibit a uniform luminance or brilliance at the section on the second-end side in the longitudinal direction, because the light guider reflects the light traveling in the second light-traveling direction within the light guider toward the front side at relatively short intervals.

The back face of the light guider preferably exhibits an irregular or undulating height falling within a range of from 0.1 mm to 4 mm, or more preferably exhibits an irregular height falling within a range of from 0.5 mm to 3.5 mm, or much more preferably exhibits an irregular height falling within a range of from 1 mm to 3 mm, for instance, although the irregular height is determined depending on the intersecting angles *θ* and *θ* _{1N} at which the first reflective faces and first non-reflective faces intersect the first light-traveling direction and the intersecting angles *θ* _{2R} and *θ* _{2N} at which the second reflective faces and second non-reflective faces intersect the second light-traveling direction, as well as depending on the intervals between the neighboring first reflective faces and/or the neighboring first non-reflective faces and the intervals between the neighboring second reflective faces and/or the neighboring second non-reflective faces.

Note that the term, the irregular height that the back face of the light guider exhibits means a distance between crests on the back-face side in the first reflective faces, first non-reflective faces, second reflective faces or second non-reflective faces, and other crests on the front-face side in the first reflective faces, first non-reflective faces, second reflective faces or second non-reflective faces (or between the crests and roots on the back-face side in the first reflective faces, first non-reflective faces, second reflective faces or second non-reflective faces).

The illumination device according to the present invention further comprises a light-amount controller for controlling outputs of the first light source and second light source so as to make a luminance of the first light source different from that of the second light source during at least some of a period of turning on the first light source and second light source. The light-amount controller thus controlling the first and second light sources allows making brightness of a section on the first-end side of the light guider different from that of another section on the second-end side, because the first and second light sources are arranged respectively on the opposite sides of the light guider in the longitudinal direction. Moreover, the light-amount controller, which is further developed suitably and appropriately to control the outputs of the first light source and second light source as described above, also permits the light to appear to move from the first end of the light guider toward the second end, or vice versa.

Hereinafter, the terms, a section on the first-end side in the light guider and another section on the second-end side will be referred to as a "first portion of the light guider" and a "second portion of the light guider," respectively, if needed.

For example, the first portion of the light guider first shines brightly, and then the second portion replacing the first portion shines brightly when the light-amount controller first increases the luminance of the first light source to a predetermined value gradually, and then increases the luminance of the second light source to the predetermined value gradually and finally decreases the luminance of the first light source gradually. Therefore, the light appears to move from the first portion of the light guider toward the second portion. That is, the illumination device according to the present invention, which is capable of thus carrying out the control of the light, allows displacing good decorative designs.

Note that, in the illumination device according to the present invention, the way how the light-amount controller controls the luminance of the first light source and that of the second light source is not at all limited to the above-described method. For example, the light-amount controller also satisfactorily switches the first light source and second light source so simply that they turn on and turn off alternately. Moreover, known controllers are usable for the light-amount controller as far as they are able to control outputs of the first light source and second light source so as to make a luminance of the first light source different from that of the second light source during at least some of a period of turning on the first light source and second light source. For example, when using the present invention illumination device as automotive interior parts or lighting parts, an automotive electronic control unit (or ECU) is also satisfactorily used as the light-amount controller. Alternatively, an independent controller, which is dedicated to the use of the light-amount controller, is even adequately prepared separately for the present illumination device.

In order that the light appears to move from the first portion of the light guider toward the second portion, or vice versa, the light guider satisfactorily has a large length in the longitudinal direction. Specifically, the light guider preferably has a length of 200 mm or more, or more preferably has a length of 250 mm or more, or much more preferably has a length of 300 mm or more, in the longitudinal direction. Moreover, in order to enhance the density of light supplied to the light guider so that the light guider shines brightly, the light guider also satisfactorily has a small thickness. Specifically, the light guider preferably has a thickness of 15 mm or less, or more preferably has a thickness of 12 mm or less, or much more preferably has a thickness of 10 mm or less.

### EMBODIMENTS

The illumination device according to the present invention will be hereinafter described in detail while enumerating specific embodiments.

### (First example)

An illumination device according to the first example, not forming part of the invention, embodies the illumination device as a turn signal for automobile. The present illumination device according to the first example is installed on each of the right and left sides of an automobile relative to the front side in the vehicular traveling direction. The present illumination device comprises a light guider with a designated installation direction taken in the normal or ordinary direction in which the longitudinal direction crosses the front/rear direction of the automobile perpendicularly. The present illumination device installed on the right side, and the present illumination device installed on the left side are identical with one another.

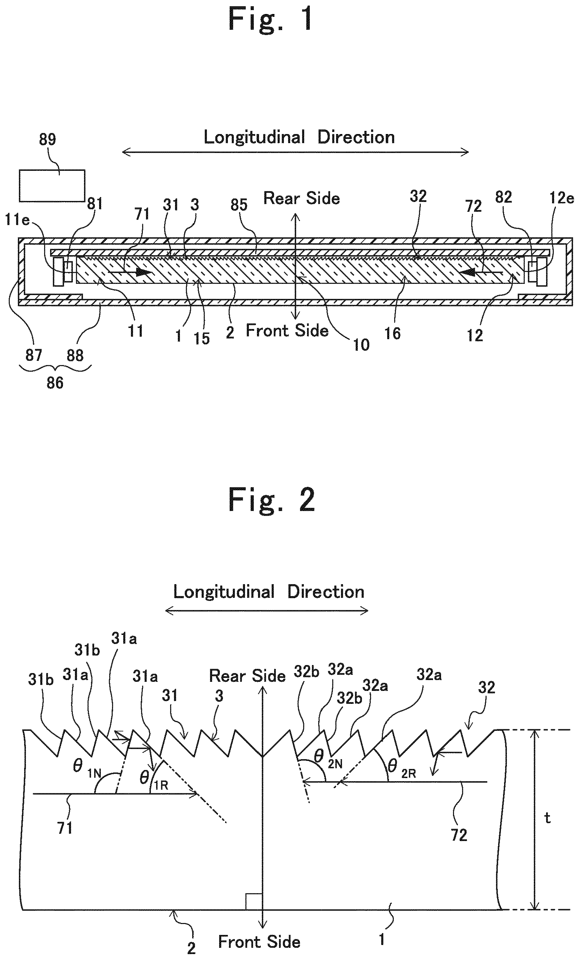

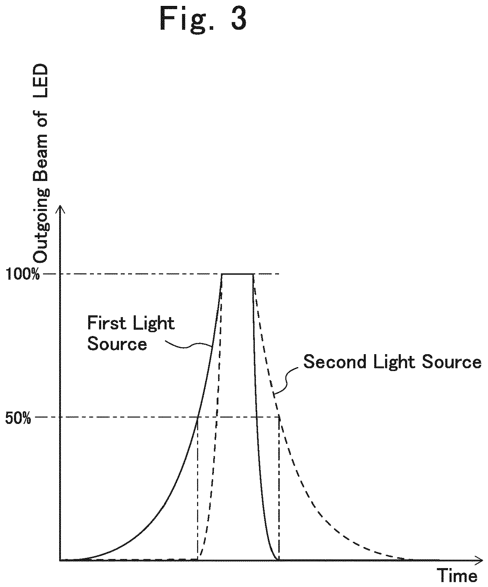

Fig. 1 is a diagram for schematically illustrating the present illumination device according to the first example, not forming part of the invention. Fig. 2 is a diagram for schematically illustrating a light guider making the present illumination device according to the first example. Fig. 3 is a diagram for schematically illustrating how to control first and second light sources making the present illumination device according to the first example.

Hereinafter, the terms, the longitudinal direction, rear side and front side, signify "the longitudinal direction, rear side and front side" indicated in Fig. 1. Moreover, the light guider has an axial line whose direction coincides with the longitudinal direction.

As illustrated in Fig. 1, the present illumination device according to the first example comprises a light guider 1, a first light source 81, a second light source 82, a reflector plate 85, a case 86, and a light-amount controller 89. Among the constituents, the light guider 1, the first light source 81, the second light source 82 and the reflector plate 85 are accommodated inside the case 86, whereas the light-amount controller 89 is arranged outside the case 86. The case 86 includes a box-shaped accommodation portion 87 directed rearward, and a transmissive portion 88 directed forward. The accommodation portion 87 is formed of an opaque acrylonitrile-butadiene-styrene (or ABS) resin. The transmissive portion 88 is formed of a transparent acrylic resin.

Note that the light-amount controller 89 is even optionally arranged inside the case 86. Moreover, the material for the accommodation portion 87 of the case 86 is not limited to the ABS resin at all, a usable material for it involves other opaque resins, such as acrylonitrile-ethylene-propylene-diene-styrene (or AES) resins, acrylonitrile-styrene-acrylate ester (or ASA) resins, polycarbonate (or PC) resins, and polybutylene terephthalate-polyethylene terephthalate (or PBT-PET) resins. In addition, the material for the transmissive portion 88 is not limited to the acrylic resin at all, a usable material for it involves other transparent resins, such as PC resins.

The light guider 1, which is accommodated inside the case 86, has a front face 2 directed to the transmissive portion 88 (namely, toward the front side), and a back face 3 directed to the accommodation portion 87 (namely, toward the rear side) . The light guider 1 has opposite ends in the longitudinal direction, specifically, a first end 11 and a second end 12, each of which is hidden by the opaque accommodation portion 87 so that they are less likely to be visible from the front side. The light guider 1, which is made of a transparent acrylic resin, makes a pillared shape whose cross section is circular. The front face 2 of the light guider 1 is formed as a flat-and-smooth face, and the back face 3 is provided with an irregular or undulating configuration as described later.

The reflector plate 85, which further covers the back face 3 of the light guider 1 from the rear side, is made of a PC resin, and is accommodated together with the light guider 1 inside the case 86.

Note that the reflector plate 85 is not limited to the thus constructed one at all, it is also satisfactorily integrated with the light guider 1. For example, even a reflector layer, which is formed by coating, adequately serves as the reflector plate 85.

Note that the material for the reflector plate 85 is not limited to the PC resin at all, and that a satisfactorily employable material for it involves ABS resins, for instance. Moreover, the other materials, which allow making up the light guider 1, have been already described as above.

The first light source 81 faces a first end face 11e that makes one of the opposite faces on the side of the first end 11 in the light guider 1. Moreover, the second light source 82 faces a second end face 12e that makes the other one of the opposite faces on the side of the second end 12 in the light guider 1. Each of the first light source 81 and second light source 82 is made of a light-emitting diode (or LED), and is connected with a power source not shown in the drawings. The first light source 81 and second light source 82 are less likely to be visible from the front side, because they are hidden by the opaque accommodation portion 87 in the same manner as the first end 11 and second end 12 of the light guider 1 are hidden.

Incoming light, which enters the light guider 1 through the first end face 11e, travels toward the second end 12. Therefore, it is possible to say that the incoming light, which enters the light guider 1 through the first end face 11e, involves a traveling direction, specifically, a first light-traveling direction 71, which coincides with the longitudinal direction in the light guider 1 directed from the first end 11 toward the second end 12 as indicated in Fig. 1. Moreover, the incoming light, which enters the light guider 1 through the second end face 12e, travels toward the first end 11. Therefore, it is possible to say that the incoming light, which enters the light guider 1 through the second end face 12e, involves another traveling direction, specifically, a second light-traveling direction 72, which coincides with the longitudinal direction in the light guider 1 directed from the second end 12 toward the first end 11 as indicated in the drawing.

The light-amount controller 89, which an automotive ECU makes, is electrically connected with the first light source 81 and second light source 82 by lead wires not shown in the drawings.

The back face 3 of the light guider 1 includes a first region 31, and a second region 32. The first region 31 has an irregular or undulating configuration, and makes a regional half on the side of the first end 11 of the light guider 1. The second region 32 also has an irregular or undulating configuration, and makes another regional half on the side of the second end 12 of the light guider 1. The first region 31 and second region 32 have a symmetric configuration, respectively, which borders on one another about the central line that the light guider 1 has in the longitudinal direction. Note that the present illumination device according to the first example comprises the light guider 1 having the back face 3 some of whose sections are hidden by the accommodation portion 87, specifically, having the back face 3 that is free of the irregular configuration at the first end 11 and second end 12 of the light guider 1. Neither the first region 31 nor the second region 32 involves some of the sections in the back face 3 of the light guider 1 that do not have any irregular configuration.

As illustrated in Fig. 2, the first region 31 is provided with alternating first reflective faces 31ₐ and first non-reflective faces 31_{b} in the order of the first reflective face 31ₐ, the first non-reflective face 31_{b}, the first reflective face 31ₐ, the first non-reflective face 31_{b}, from the first end 11 toward the second end 12. Moreover, the second region 32 is provided with alternating second reflective faces 32ₐ and second non-reflective faces 32_{b} in the order of the second reflective face 32ₐ, the second non-reflective face 32_{b}, the second reflective face 32ₐ, the second non-reflective faces 32_{b}, from the second end 12 toward the first end 11.

The first reflective faces 31ₐ intersect the first light-traveling direction 71, and the first non-reflective faces 31_{b} also intersect the first light-traveling direction 71. Specifically, the first reflective faces 31ₐ intersect the first light-traveling direction 71 at an intersecting angle *θ* _{1R} of 45 deg., and the first non-reflective faces 31_{b} intersect the first light-traveling direction 71 at an intersecting angle *θ* _{1N} of 125 deg.

Meanwhile, the second reflective faces 32ₐ intersect the second light-traveling direction 72, and the second non-reflective faces 32_{b} also intersect the second light-traveling direction 72. Specifically, the second reflective faces 32ₐ intersect the second light-traveling direction 72 at an intersecting angle *θ* _{2R} of 45 deg., and the second non-reflective faces 32_{b} intersect the second light-traveling direction 72 at an intersecting angle *θ* _{2N} of 125 deg.

Moreover, the first reflective faces 31ₐ neighbor each other at intervals of 1 mm, the first non-reflective faces 31_{b} neighbor each other at intervals of 1 mm, the second reflective faces 32ₐ neighbor each other at intervals of 1 mm, and the second non-reflective faces 32_{b} neighbor each other at intervals of 1 mm. Note that the term, the "intervals between the respective faces," signifies distances between the rear-side crests that the respective faces have in the longitudinal direction.

Note that the present illumination device according to the first example comprises the light guider 1 having the back face 3 some of whose section provided with the irregular configuration has a length of 400 mm in the longitudinal direction. Moreover, the light guider 1 has a constant-value thickness designated with "t" in Fig. 2, that is, the light guider 1 has a thickness of 10 mm constantly in the front face/back face direction crossing the longitudinal direction perpendicularly.

The light, which travels in the first light-traveling direction 71 in the light guider 1, reflects off the first reflective faces 31ₐ and then goes out through the front face 2, because the first reflective faces 31ₐ intersect the first light-traveling direction 71 at such a sufficiently small intersecting angle *θ* _{1R} as 45 deg., as shown in Fig. 2. In contrast, the first non-reflective faces 31_{b} are less likely to interfere with the light traveling in the first light-traveling direction 71 in the light guider 1, because the first non-reflective faces 31_{b} intersect the first light-traveling direction 71 at such a sufficiently large intersecting angle *θ* _{1N} as 125 deg. As a result, the first non-reflective faces 31_{b} are less likely to contribute to reflecting the light traveling in the first light-traveling direction 71 in the light guider 1. Consequently, the first reflective faces 31ₐ mainly control the reflection directions of the light traveling in the first light-traveling direction 71 in the light guider 1.

Moreover, the present illumination device according to the first example comprises the light guider 1 including the first reflective faces 31ₐ that intersect the first light-traveling direction 71 at such a sufficiently small intersecting angle *θ* _{1R} as 45 deg. The thus set intersecting angle *θ* _{1R} enables the first reflective faces 31ₐ to reflect the light traveling in the first light-traveling direction 71 to the front side of the present illumination device.

Likewise, the second reflective faces 32ₐ are able to reflect the light traveling in the second light-traveling direction 72 to the front side of the present illumination device according to First Embodiment, because the intersecting angle *θ* _{2R}, at which the second reflective faces 32ₐ intersect the second light-traveling direction 72, is set at such a sufficiently small value as 45 deg.

Hereinafter, descriptions will be made on how the light-amount controller 89 controls the first light source 81 and second light source 82 to turn them on and off, based on Fig. 3.

The light-amount controller 89, which is connected with the first light source 81 and second light source 82, controls turning the first light source 81 on and off, and turning the second light source 82 on and off, independently of one another. The light-amount controller 89, which begins the control operations, turns off the first light source 81 and second light source 82. As illustrated with the continuous line in Fig. 3, the light-amount controller 89 first turns on the first light source 81, and then gradually enlarges the output of the turned-on first light source 81. Thus, after being turned on, the first light source 81 emits a gradually enlarging light flux, and also exhibits a gradually enlarging luminance.

Moreover, as illustrated with the dashed line in Fig. 3, the light-amount controller 89 turns on the second light source 82 at the timing when the first light source 81 exhibits a 50% luminance of the maximum value (or 50% of the maximum-value luminance), and then gradually enlarges the output of the turned-on second light source 82. On this occasion, the light-amount controller 89 adjusts the outputs of the first light source 81 and second light source 82 in the following manner: the luminance of the first light source 81 is larger than that of the second light source 82; the luminance of the second light source 82 rises at a larger rate than the rate at which the luminance of the first light source 81 rises; and the luminance of the first light source 81, and that of the second light source 82 simultaneously reach at their maximum value, namely, 100%.

In addition, the light-amount controller 89 keeps the first light source 81 and second light source 82 under the condition that both of them exhibit the 100% luminance for a predetermined period of time; then gradually decreases the outputs of the first light source 81 and second light source 82; and eventually turns off the first light source 81 and second light source 82. On this occasion, the light-amount controller 89 adjusts the outputs of the first light source 81 and second light source 82 in the following manner: the luminance of the second light source 82 is larger than that of the first light source 81; the luminance of the first light source 81 declines at a larger rate than the rate at which the luminance of the source light source 82 declines; and the first light source 81 is turned off at the timing when the luminance of the second light source 82 reaches 50% of the set value, namely, 50% of the maximum value.

The light-amount controller 89, which thus controls the outputs of the first light source 81 and second light source 82, makes the light appear to flow from the first portion 15 of the light guider 1 toward the second portion 16.

The above-described illumination device according to the first example allows displaying good decorative designs.

### (Second and third examples)

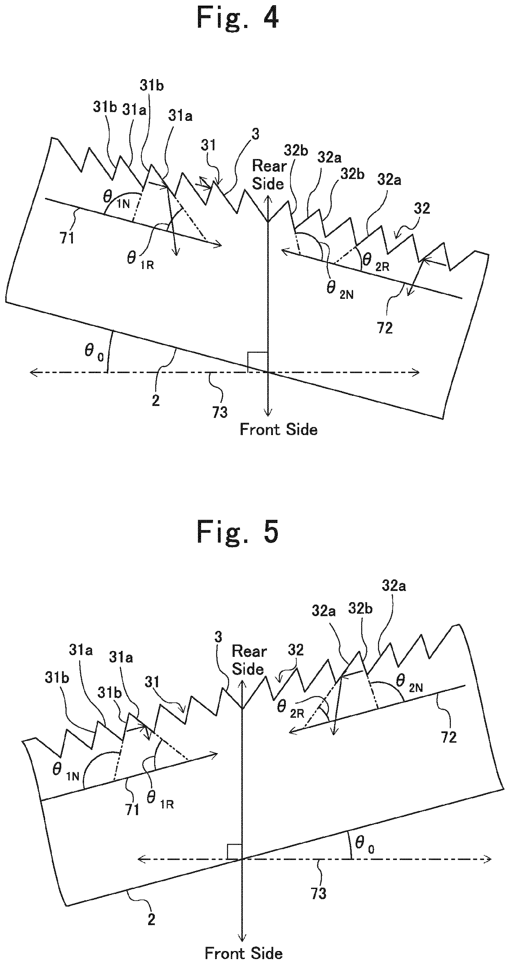

An illumination device according to the second example, not forming part of the invention, is roughly identical with that according to first example except for the configuration and installation angle of the light guider 1. Specifically, the present illumination device according to the second example, which makes a turn signal for automobile, is installed on the right side of the automobile relative to the front side in the vehicular traveling direction. The present illumination device according to the second example comprises the light guider 1 installed in the first inclination direction in which the first end 11 is located more rearward than the second end 12 is located. Fig. 4 is a diagram for schematically illustrating the light guider 1 making the present illumination device according to the second example, not forming part of the invention.

As illustrated in Fig. 4, the present illumination device according to the second example comprises the light guider 1 installed obliquely or sideways. Specifically, the light guider 1 has the front face 2 intersecting a front-face direction 73, which intersects the vehicular front/rear direction perpendicularly, at an intersecting angle *θ* ₀. More specifically, the present illumination device comprises the oblique front face 2 intersecting the front-face direction 73 at an intersecting angle *θ* ₀ of 20 deg.

The light guider 1 includes the first reflective faces 31ₐ intersecting the first light-traveling direction 71 at an intersecting angle of *θ* _{1R} of 35 deg. that falls within a range of from (50 - *θ*₀) deg. to (80 - *θ*₀) deg., namely, within a range of from 30 deg. to 60 deg. Thus, even the present illumination device according to the second example comprising the obliquely-installed light guider 1 directs the light, which travels in the first light-traveling direction 71 to reflect off the first reflective faces 31ₐ, to the front side of the light guider 1.

Moreover, the light guider 1 includes the second reflective faces 32ₐ intersecting the second light-traveling direction 72 at an intersecting angle of *θ* _{2R} of 60 deg. that falls within a range of from (10 + *θ* ₀) deg. to (50 + *θ*₀) deg., namely, within a range of from 30 deg. to 70 deg. Thus, even the present illumination device according to the second example comprising the obliquely-installed light guider 1 directs the light, which travels in the second light-traveling direction 72 to reflect off the second reflective faces 32ₐ, to the front side of the light guider 1.

In addition, the light guider 1 includes the first non-reflective faces 31_{b} intersecting the first light-traveling direction 71 at an intersecting angle of *θ* _{1N} of 100 deg. that falls within a range of from 80 deg. to (160 - *θ*₀) deg., namely, within a range of from 80 deg. to 140 deg. Moreover, the light guider 1 includes the second non-reflective faces 32_{b} intersecting the second light-traveling direction 72 at an intersecting angle of *θ* _{2N} of 120 deg. that falls within a range of from 80 deg. to (120 + *θ*₀) deg., namely, within a range of from 80 deg. to 140 deg. The present illumination device according to the second example comprises the obliquely-installed light guider 1 whose first non-reflective faces 31_{b} are less likely to interfere with the light traveling in the first light-traveling direction 71 within the light guider 1, and whose second non-reflective faces 32_{b} are less likely to interfere with the light traveling in the second light-traveling direction 72 within the light guider 1. Therefore, most of the light traveling within the light guider 1 reflect off the first reflective faces 31ₐ or second reflective faces 32ₐ, and then go out to the front side of the light guider 1 through the front face 2. Hence, the present illumination device according to the second example also allows displaying good decorative designs, because the first reflective faces 31ₐ and second reflective faces 32ₐ permit precisely controlling the directions of the outgoing light.

### (Third Embodiment)

An illumination device according to a third example, not forming part of the invention, is roughly identical with that according to the first example except for the configuration and installation angle of the light guider 1. Specifically, the present illumination device according to the third example, which makes a turn signal for automobile, is installed on the left side of the automobile relative to the front side in the vehicular traveling direction. The present illumination device according to the third example comprises the light guider 1 installed in the second inclination direction in which the second end 12 is located more rearward than the first end 11 is located. Fig. 5 is a diagram for schematically illustrating the light guider 1 making the present illumination device according to the third example not forming part of the invention.

As illustrated in Fig. 5, the present illumination device according to the third example comprises the light guider 1 installed obliquely or sideways. Specifically, the light guider 1 has the front face 2 intersecting a front-face direction 73, which intersects the vehicular front/rear direction perpendicularly, at an intersecting angle *θ* ₀. More specifically, the present illumination device comprises the oblique front face 2 intersecting the front-face direction 73 at an intersecting angle *θ* ₀ of 20 deg.

The light guider 1 includes the second reflective faces 32ₐ intersecting the second light-traveling direction 72 at an intersecting angle of *θ* _{2R} of 35 deg. that falls within a range of from (50 - *θ*₀) deg. to (80 - *θ*₀) deg., namely, within a range of from 30 deg. to 60 deg. Thus, even the present illumination device according to the third example comprising the obliquely-installed light guider 1 directs the light, which travels in the second light-traveling direction 72 to reflect off the second reflective faces 32ₐ, to the front side of the light guider 1.

Moreover, the light guider 1 includes the first reflective faces 31ₐ intersecting the first light-traveling direction 71 at an intersecting angle of *θ* _{1R} of 60 deg. that falls within a range of from (10 + *θ*₀) deg. to (50 + *θ*₀) deg., namely, within a range of from 30 deg. to 70 deg. Thus, even the present illumination device according to the third example comprising the obliquely-installed light guider 1 directs the light, which travels in the first light-traveling direction 71 to reflect off the first reflective faces 31ₐ, to the front side of the light guider 1.

In addition, the light guider 1 includes the second non-reflective faces 32_{b} intersecting the second light-traveling direction 72 at an intersecting angle of *θ* _{2N} of 100 deg. that falls within a range of from 80 deg. to (160 - *θ*₀) deg., namely, within a range of from 80 deg. to 140 deg. Moreover, the light guider 1 includes the first non-reflective faces 31_{b} intersecting the first light-traveling direction 71 at an intersecting angle of *θ* _{1N} of 120 deg. that falls within a range of from 80 deg. to (120 + *θ*₀) deg., namely, within a range of from 80 deg. to 140 deg. The present illumination device according to Third example comprises the obliquely-installed light guider 1 whose second non-reflective faces 32_{b} are less likely to interfere with the light traveling in the second light-traveling direction 72 within the light guider 1, and whose first non-reflective faces 31_{b} are less likely to interfere with the light traveling in the first light-traveling direction 71 within the light guider 1. Therefore, most of the light traveling within the light guider 1 reflect off the first reflective faces 31ₐ or second reflective faces 32ₐ, and then go out to the front side of the light guider 1 through the front face 2. Hence, the present illumination device according to the third example also allows displaying good decorative designs, because the first reflective faces 31ₐ and second reflective faces 32ₐ permit precisely controlling the directions of the outgoing light.

### Embodiment of the invention

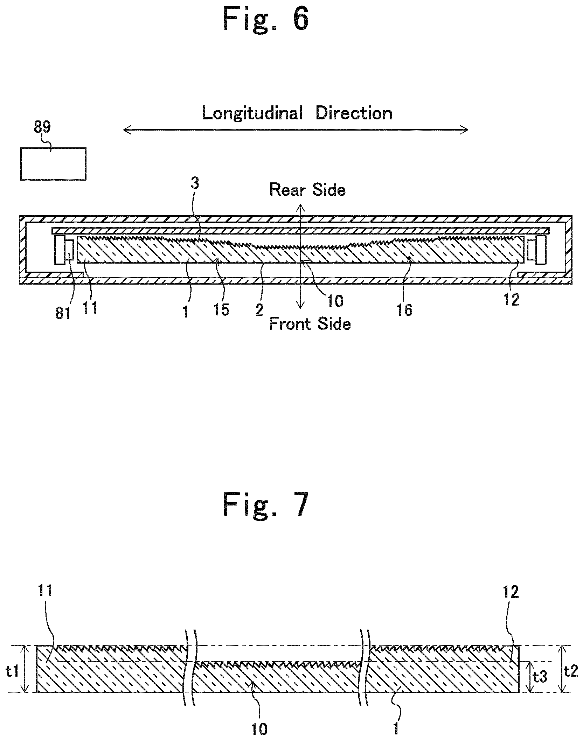

An illumination device according to the present invention is roughly identical with the first example except for the configuration of the light guider 1. Figs. 6 and 7 are diagrams for schematically illustrating the light guider 1 making the present illumination device according to the invention. Note that Fig. 7 is an enlarged diagram for illustrating a major part in the light guider 1 shown in Fig. 6.

As illustrated in Fig. 6, the present illumination device according to the invention comprises the light guider 1 whose thickness is varied to be thicker at the first end 11 and second end 12 and to be thinner at the middle 10. Moreover, the light guider 1 includes the middle 10 whose thickness is thinner than those at most part of the first portion 15 and second portion 16. As illustrated in Fig. 7, a thickness t₃, which the light guider 1 has at the middle 10, is approximately 2/3 of each of thicknesses t₁ and t₂, which the light guider 1 has at the first end 11 and second end 12.

As having been described already, the middle 10 in the light guider 1 is a section that tends to be deficient in the light amount. However, setting the thickness of the light guider 1 thus variously allows enhancing the middle 10 in the light density, thereby enabling the middle 10 to shine brightly. Therefore, the present illumination device according to the invention permits displaying good decorative designs.

Having now fully described the present invention, it will be apparent to one of ordinary skill in the art that many changes and modifications can be made thereto without departing from the scope of the present invention as set forth herein including the appended claims .

## Claims

1. An illumination device for vehicle, the illumination device comprising:
a light guider (1) having a first end (11) making one of opposite ends thereof in a longitudinal direction thereof, a second end (12) making another one of the opposite ends in the longitudinal direction, a front face (2) arranged on a front side upon installation, and a back face (3) arranged back-to-back to the front face (2);
a first light source (81) for irradiating the first end (11) with light;
a second light source (82) for irradiating the second end (12) with the light; and
a light-amount controller (89) for controlling outputs of the first light source (81) and second light source (82) so as to make a luminance of the first light source (81) different from that of the second light source (82) during at least some of a period of turning on the first light source (81) and second light source (82);
the front face (2) formed as a flat-and-smooth shape;
the back face (3) having a first region (31) located on a side of the first end (11), and a second region (32) located on a side of the second end (12);
the first region (31) having an irregular configuration in which first reflective faces (31ₐ) and first non-reflective faces (31_{b}) are made one after another in succession alternately, the first reflective faces (31ₐ) intersecting a first light-traveling direction (71), which is directed from the first end (11) to the second end (12), at an intersecting angle, the first non-reflective faces (31_{b}) intersecting the first light-traveling direction (71) at an angle that is larger than the intersecting angle of the first reflective faces (31ₐ);
the second region (32) having an irregular configuration in which second reflective faces (32ₐ) and second non-reflective faces (32_{b}) are made one after another in succession alternately, the second reflective faces (32ₐ) intersecting a second light-traveling direction (72), which is directed from the second end (12) to the first end (11), at an intersecting angle, the second non-reflective faces (32_{b}) intersecting the second light-traveling direction (72) at an angle that is larger than the intersecting angle of the second reflective faces (32ₐ);
the illumination device satisfying any of following Requirements (I) through (III):
(I) the light guider (1) involves a first designated installation direction making a normal direction in which the longitudinal direction intersects a front/rear direction perpendicularly;
the first reflective faces (31ₐ) intersect the first light-traveling direction (71) at an intersecting angle *θ* _{1R}, the second reflective faces (32ₐ) intersect the second light-traveling direction (72) at an intersecting angle *θ* _{2R}, and each of the intersecting angles *θ* _{1R} and *θ* _{2R} falls within a range of from 30 deg. to 60 deg.; and
the first non-reflective faces (31_{b}) intersect the first light-traveling direction (71) at an intersecting angle *θ* _{1N}, the second non-reflective faces (32_{b}) intersect the second light-traveling direction (72) at an intersecting angle *θ* _{2N}, and each of the intersecting angles *θ* _{1N} and *θ* _{2N} falls within a range of from 90 deg. to 130 deg.;
(II) the light guider (1) involves a second designated installation direction making a first inclination direction in which the first end (11) is located more rearward than the second end (12) is located;
the front face (2) intersects a front-face direction, which crosses the front/rear direction perpendicularly, at an intersecting angle *θ*₀;
an intersecting angle *θ* _{1R} at which the first reflective faces (31ₐ) intersect the first light-traveling direction (71) falls within a range of from (50 - *θ*₀) deg. to (80 - *θ*₀) deg.;
an intersecting angle *θ* _{2R} at which the second reflective faces (32ₐ) intersect the second light-traveling direction (72) falls within a range of from (10 + *θ*₀) deg. to (50 + *θ*₀) deg.;
an intersecting angle *θ* _{1N} at which the first non-reflective faces (31_{b}) intersect the first light-traveling direction (71) falls within a range of from 80 deg. to (160 - *θ*₀) deg.; and
an intersecting angle *θ* _{2N} at which the second non-reflective faces (32_{b}) intersect the second light-traveling direction (72) falls within a range of from 80 deg. to (120 + *θ*₀) deg.; and
(III) the light guider (1) involves a third designated installation direction making a second inclination direction in which the second end (12) is located more rearward than the first end (11) is located;
the front face (2) intersects a front-face direction, which crosses the front/rear direction perpendicularly, at an intersecting angle *θ*₀;
an intersecting angle *θ* _{2R} at which the second reflective faces (32ₐ) intersect the second light-traveling direction (72) falls within a range of from (50 - *θ*₀) deg. to (80 - *θ*₀) deg.;
an intersecting angle *θ* _{1R} at which the first reflective faces (31ₐ) intersect the first light-traveling direction (71) falls within a range of from (10 + *θ*₀) deg. to (50 + *θ*₀) deg.;
an intersecting angle *θ* _{2N} at which the second non-reflective faces (32_{b}) intersect the second light-traveling direction (72) falls within a range of from 80 deg. to (160 - *θ*₀) deg.; and
an intersecting angle *θ* _{1N} at which the first non-reflective faces (31_{b}) intersect the first light-traveling direction (71) falls within a range of from 80 deg. to (120 + *θ*₀) deg.,
wherein the light guider (1) has a middle (10) in the longitudinal direction, the middle (10) having a thickness that is thinner than thicknesses that other sections have on a side of the first end (11) and on a side of the second end (12).

2. The illumination device according to claim 1 satisfying Requirement (I) above, wherein;
each of the intersecting angle *θ*_{1R} and intersecting angle *θ* _{2R} falls within a range of from 40 deg. to 50 deg.; and
each of the intersecting angle *θ* _{1N} and intersecting angle *θ* _{2N} falls within a range of from 90 deg. to 130 deg.

3. The illumination device according to claim 1 satisfying Requirement (II) above, wherein;
the intersecting angle *θ* _{1R} falls within a range of from 5 deg. to 40 deg.;
the intersecting angle *θ* _{2R} falls within a range of from 50 deg. to 90 deg.;
the intersecting angle *θ* _{1N} falls within a range of from 80 deg. to 120 deg.; and
the intersecting angle *θ* _{2N} falls within a range of from 110 deg. to 170 deg.

4. The illumination device according to claim 1 satisfying Requirement (III) above, wherein;
the intersecting angle *θ* _{2R} falls within a range of from 5 deg. to 40 deg.;
the intersecting angle *θ* _{1R} falls within a range of from 50 deg. to 90 deg.;
the intersecting angle *θ* _{2N} falls within a range of from 80 deg. to 120 deg.; and
the intersecting angle *θ* _{1N} falls within a range of from 110 deg. to 170 deg.

## Patentansprüche

1. Beleuchtungsvorrichtung für Fahrzeug, mit:
einem Lichtleiter (1), der ein erstes Ende (11), das eines entgegengesetzter Enden davon in einer longitudinalen Richtung davon ausbildet, ein zweites Ende (12), das ein anderes der entgegengesetzten Enden in der longitudinalen Richtung ausbildet, eine vordere Fläche (2), die bei Installation auf einer Vorderseite angeordnet ist, und eine hintere Fläche (3), die Rückseite an Rückseite zu der vorderen Fläche (2) angeordnet ist, aufweist;
einer ersten Lichtquelle (81) zum Bestrahlen des ersten Endes (11) mit Licht;
einer zweiten Lichtquelle (82) zum Bestrahlen des zweiten Endes (12) mit dem Licht; und
einer Lichtmengensteuerung (89) zum Steuern von Ausgaben der ersten Lichtquelle (81) und der zweiten Lichtquelle (82) so, dass eine Leuchtkraft der ersten Lichtquelle (81) von jener der zweiten Lichtquelle (82) während zumindest etwas eines Zeitraums eines Einschaltens der ersten Lichtquelle (81) und der zweiten Lichtquelle (82) verschieden gemacht wird;
welche vordere Fläche (2) als eine flache und glatte Form ausgebildet ist;
welche hintere Fläche (3) einen ersten Bereich (31), der auf einer Seite des ersten Endes (11) gelegen ist, und einen zweiten Bereich (32), der auf einer Seite des zweiten Endes (12) gelegen ist, aufweist;
welcher erste Bereich (31) eine unregelmäßige Ausgestaltung aufweist, in der erste reflektierende Flächen (31ₐ) und erste nichtreflektierende Flächen (31_{b}) nacheinander in Folge alternierend ausgebildet sind, welche ersten reflektierenden Flächen (31ₐ) eine erste Lichtausbreitungsrichtung (71), die von dem ersten Ende (11) zu dem zweiten Ende (12) gerichtet ist, bei einem Schnittwinkel schneiden, welche ersten nichtreflektierenden Flächen (31_{b}) die erste Lichtausbreitungsrichtung (71) bei einem Winkel, der größer als der Schnittwinkel der ersten reflektierenden Flächen (31ₐ) ist, schneiden;
welcher zweite Bereich (32) eine unregelmäßige Ausgestaltung aufweist, in der zweite reflektierende Flächen (32ₐ) und zweite nichtreflektierende Flächen (32_{b}) nacheinander in Folge alternierend ausgebildet sind, welche zweiten reflektierenden Flächen (32ₐ) eine zweite Lichtausbreitungsrichtung (72), die von dem zweiten Ende (12) zu dem ersten Ende (11) gerichtet ist, bei einem Schnittwinkel schneiden, welche zweiten nichtreflektierenden Flächen (32_{b}) die zweite Lichtausbreitungsrichtung (72) bei einem Winkel, der größer als der Schnittwinkel der zweiten reflektierenden Flächen (32ₐ) ist, schneiden;
welche Beleuchtungsvorrichtung eine der folgenden Anforderungen (I) bis (III) erfüllt:
(I) der Lichtleiter (1) weist eine erste bestimmte Installationsrichtung auf, die eine normale Richtung ausbildet, in der die longitudinale Richtung eine Vorne/hinten-Richtung senkrecht schneidet;
die ersten reflektierenden Flächen (31ₐ) schneiden die erste Lichtausbreitungsrichtung (71) bei einem Schnittwinkel θ _{1R}, die zweiten reflektierenden Flächen (32ₐ) schneiden die zweite Lichtausbreitungsrichtung (72) bei einem Schnittwinkel θ _{2R}, und jeder der Schnittwinkel θ _{1R} und θ _{2R} fällt in einen Bereich von 30 Grad bis 60 Grad; und
die ersten nichtreflektierenden Flächen (31_{b}) schneiden die erste Lichtausbreitungsrichtung (71) bei einem Schnittwinkel θ _{1N}, die zweiten nichtreflektierenden Flächen (32_{b}) schneiden die zweite Lichtausbreitungsrichtung (72) bei einem Schnittwinkel θ _{2N}, und jeder der Schnittwinkel θ _{1N} und θ _{2N} fällt in einen Bereich von 90 Grad bis 130 Grad;
(II) der Lichtleiter (1) weist eine zweite bestimmte Installationsrichtung auf, die eine erste Neigungsrichtung ausbildet, in der das erste Ende (11) weiter hinten gelegen ist, als das zweite Ende (12) gelegen ist;
die vordere Fläche (2) schneidet eine Vorderflächenrichtung, die die Vorne/hinten-Richtung senkrecht kreuzt, bei einem Schnittwinkel θ ₀;
ein Schnittwinkel θ _{1R}, bei dem die ersten reflektierenden Flächen (31ₐ) die erste Lichtausbreitungsrichtung (71) schneiden, fällt in einen Bereich von (50 - θ₀) Grad bis (80 - θ₀) Grad;
ein Schnittwinkel θ _{2R}, bei dem die zweiten reflektierenden Flächen (32ₐ) die zweite Lichtausbreitungsrichtung (72) schneiden, fällt in einen Bereich von (10 + θ₀) Grad bis (50 + θ₀) Grad;
ein Schnittwinkel θ _{1N}, bei dem die ersten nichtreflektierenden Flächen (31_{b}) die erste Lichtausbreitungsrichtung (71) schneiden, fällt in einen Bereich von 80 Grad bis (160 - θ₀) Grad; und
ein Schnittwinkel θ _{2N}, bei dem die zweiten nichtreflektierenden Flächen (32_{b}) die zweite Lichtausbreitungsrichtung (72) schneiden, fällt in einen Bereich von 80 Grad bis (120 + θ₀) Grad; und
(III) der Lichtleiter (1) weist eine dritte bestimmte Installationsrichtung auf, die eine zweite Neigungsrichtung ausbildet, in der das zweite Ende (12) weiter hinten gelegen ist, als das erste Ende (11) gelegen ist;
die vordere Fläche (2) schneidet eine Vorderflächenrichtung, die die Vorne/hinten-Richtung senkrecht kreuzt, bei einem Schnittwinkel θ₀;
ein Schnittwinkel θ _{2R}, bei dem die zweiten reflektierenden Flächen (32ₐ) die zweite Lichtausbreitungsrichtung (72) schneiden, fällt in einen Bereich von (50 - θ ₀) Grad bis (80 - θ ₀) Grad;
ein Schnittwinkel θ _{1R}, bei dem die ersten reflektierenden Flächen (31ₐ) die erste Lichtausbreitungsrichtung (71) schneiden, fällt in einen Bereich von (10 + θ₀) Grad bis (50 + θ₀) Grad;
ein Schnittwinkel θ_{2N}, bei dem die zweiten nichtreflektierenden Flächen (32_{b}) die zweite Lichtausbreitungsrichtung (72) schneiden, fällt in einen Bereich von 80 Grad bis (160 - θ₀) Grad; und
ein Schnittwinkel θ _{1N}, bei dem die ersten nichtreflektierenden Flächen (31_{b}) die erste Lichtausbreitungsrichtung (71) schneiden, fällt in einen Bereich von 80 Grad bis (120 + θ₀) Grad,
bei der der Lichtleiter (1) eine Mitte (10) in der longitudinalen Richtung aufweist, welche Mitte (10) eine Dicke aufweist, die dünner als Dicken, die andere Abschnitte auf einer Seite des ersten Endes (11) und auf einer Seite des zweiten Endes (12) aufweisen, ist.

2. Beleuchtungsvorrichtung nach Anspruch 1, die Anforderung (I) oben erfüllt, bei der;
jeder von dem Schnittwinkel θ _{1R} und Schnittwinkel θ _{2R} in einen Bereich von 40 Grad bis 50 Grad fällt; und
jeder von dem Schnittwinkel θ _{1N} und Schnittwinkel θ _{2N} in einen Bereich von 90 Grad bis 130 Grad fällt.

3. Beleuchtungsvorrichtung nach Anspruch 1, die Anforderung (II) oben erfüllt, bei der;
der Schnittwinkel θ _{1R} in einen Bereich von 5 Grad bis 40 Grad fällt;
der Schnittwinkel θ _{2R} in einen Bereich von 50 Grad bis 90 Grad fällt;
der Schnittwinkel θ _{1N} in einen Bereich von 80 Grad bis 120 Grad fällt; und
der Schnittwinkel θ _{2N} in einen Bereich von 110 Grad bis 170 Grad fällt.

4. Beleuchtungsvorrichtung nach Anspruch 1, die Anforderung (III) oben erfüllt, bei der;
der Schnittwinkel θ _{2R} in einen Bereich von 5 Grad bis 40 Grad fällt;
der Schnittwinkel θ _{1R} in einen Bereich von 50 Grad bis 90 Grad fällt;
der Schnittwinkel θ _{2N} in einen Bereich von 80 Grad bis 120 Grad fällt; und
der Schnittwinkel θ _{1N} in einen Bereich von 110 Grad bis 170 Grad fällt.

## Revendications

1. Dispositif d'éclairage pour véhicule, le dispositif d'éclairage comprenant :
un guide de lumière (1) ayant une première extrémité (11) formant une de ses extrémités opposées dans une direction longitudinale de celui-ci, une deuxième extrémité (12) formant une autre des extrémités opposées dans la direction longitudinale, une face avant (2) disposée sur un côté avant lors de l'installation, et une face arrière (3) disposée dos à dos vers la face avant (2) ;
une première source de lumière (81) pour irradier la première extrémité (11) avec de la lumière ;
une deuxième source de lumière (82) pour irradier la deuxième extrémité (12) avec de la lumière ; et
un contrôleur de quantité de lumière (89) pour contrôler les sorties de la première source de lumière (81) et de la deuxième source de lumière (82) de manière à rendre une luminance de la première source de lumière (81) différente de celle de la deuxième source de lumière (82) pendant au moins une partie d'une période d'allumage de la première source de lumière (81) et de la deuxième source de lumière (82) ;
la face avant (2) de forme plate et lisse ;
la face arrière (3) ayant une première région (31) située sur un côté de la première extrémité (11), et une deuxième région (32) située sur un côté de la deuxième extrémité (12) ;
la première région (31) ayant une configuration irrégulière dans laquelle des premières faces réfléchissantes (31ₐ) et des premières faces non réfléchissantes (31_{b}) sont réalisées l'une après l'autre successivement en alternance, les premières faces réfléchissantes (31ₐ) croisant une première direction de déplacement de lumière (71), qui est dirigée de la première extrémité (11) à la deuxième extrémité (12), selon un angle d'intersection, les premières faces non réfléchissantes (31_{b}) croisant la première direction de déplacement de lumière (71) selon un angle plus grand que l'angle d'intersection des premières faces réfléchissantes (31ₐ) ;
la deuxième région (32) ayant une configuration irrégulière dans laquelle les deuxièmes faces réfléchissantes (32ₐ) et les deuxièmes faces non réfléchissantes (32_{b}) sont réalisées l'une après l'autre successivement en alternance, les deuxièmes faces réfléchissantes (32ₐ) croisant une deuxième direction de déplacement de lumière (72), qui est dirigée de la deuxième extrémité (12) à la première extrémité (11), selon un angle d'intersection, les deuxièmes faces non réfléchissantes (32_{b}) croisant la deuxième direction de déplacement de lumière (72) selon un angle plus grand que l'angle d'intersection des deuxièmes faces réfléchissantes (32ₐ);
le dispositif d'éclairage satisfaisant à l'une quelconque des exigences suivantes (I) à (III):
(I) le guide de lumière (1) comporte une première direction d'installation désignée faisant une direction normale dans laquelle la direction longitudinale croise perpendiculairement une direction avant/arrière ;
les premières faces réfléchissantes (31ₐ) croisent la première direction de déplacement de lumière (71) à un angle d'intersection ϑ_{1R}, les deuxièmes faces réfléchissantes (32ₐ) croisent la deuxième direction de déplacement de lumière (72) à un angle d'intersection ϑ_{2R}, et chacun des angles d'intersection ϑ_{1R} et ϑ_{2R} se situe dans une plage de 30 degrés à 60 degrés ; et
les premières faces non réfléchissantes (31_{b}) croisent la première direction de déplacement de lumière (71) à un angle d'intersection ϑ_{1N}, les deuxièmes faces non réfléchissantes (32_{b}) croisent la deuxième direction de déplacement de lumière (72) à un angle d'intersection ϑ_{2N}, et chacun des angles d'intersection ϑ_{1N} et ϑ_{2N} se situe dans une plage de 90 degrés à 130 degrés ;
(II) le guide de lumière (1) comporte une deuxième direction d'installation désignée faisant une première direction d'inclinaison dans laquelle la première extrémité (11) est située plus vers l'arrière qu'est située la deuxième extrémité (12) ;
la face avant (2) croise une direction de face avant, qui croise perpendiculairement la direction avant/arrière, à un angle d'intersection ϑ₀ ;
un angle d'intersection ϑ_{1R} auquel les premières faces réfléchissantes (31ₐ) croisent la première direction de déplacement de lumière (71) se situe dans une plage de (50 - ϑ₀) degrés à (80 - ϑ₀) degrés ;
un angle d'intersection ϑ_{2R}, auquel les deuxièmes faces réfléchissantes (32ₐ) croisent la deuxième direction de déplacement de lumière (72), se situe dans une plage de (10 + ϑ₀) degrés à (50 + ϑ₀) degrés ;
un angle d'intersection ϑ_{1N}, auquel les premières faces non réfléchissantes (31_{b}) croisent la première direction de déplacement de lumière (71), se situe dans une plage de 80 degrés à (160 - ϑ₀) degrés ; et
un angle d'intersection ϑ_{2N} auquel les deuxièmes faces non réfléchissantes (32_{b}) croisent la deuxième direction de déplacement de lumière (72) se situe dans une plage de 80 degrés à (120 + ϑ₀) degrés ; et
(III) le guide de lumière (1) comporte une troisième direction d'installation désignée faisant une deuxième direction d'inclinaison dans laquelle la deuxième extrémité (12) est située plus en arrière que la première extrémité (11) ;
la face avant (2) croise une direction de face avant, qui croise perpendiculairement la direction avant/arrière, à un angle d'intersection ϑ₀ ;
un angle d'intersection ϑ_{2R}, auquel les deuxièmes faces réfléchissantes (32ₐ) croisent la deuxième direction de déplacement de lumière (72), se situe dans une plage de (50 - ϑ₀) degrés à (80 - ϑ₀) degrés ;
un angle d'intersection ϑ_{1R}, auquel les premières faces réfléchissantes (31ₐ) croisent la première direction de déplacement de lumière (71), se situe dans une plage de (10 + ϑ₀) degrés à (50 + ϑ₀) degrés ;
un angle d'intersection ϑ_{2N}, auquel les deuxièmes faces non réfléchissantes (32_{b}) croisent la deuxième direction de déplacement de lumière (72), se situe dans une plage de 80 degrés à (160 - ϑ₀) degrés ; et
un angle d'intersection ϑ_{1N} auquel les premières faces non réfléchissantes (31_{b}) croisent la première direction de déplacement de lumière (71) se situe dans une plage de 80 degrés à (120 + ϑ₀) degrés,
dans lequel le guide de lumière (1) a un milieu (10) dans la direction longitudinale, le milieu (10) ayant une épaisseur qui est plus mince que les épaisseurs que d'autres sections ont sur un côté de la première extrémité (11) et sur un côté de la deuxième extrémité (12).

2. Dispositif d'éclairage selon la revendication 1 satisfaisant à l'exigence (I) ci-dessus, dans lequel ;
chacun des angles d'intersection ϑ_{1R} et ϑ_{2R} se situe dans une plage allant de 40 degrés à 50 degrés ; et
chacun des angles d'intersection ϑ_{1N} et ϑ_{2N} se situe dans une plage de 90 degrés à 130 degrés.

3. Dispositif d'éclairage selon la revendication 1 satisfaisant à l'exigence (II) ci-dessus, dans lequel ;
l'angle d'intersection ϑ_{1R} se situe dans une plage de 5 degrés à 40 degrés ;
l'angle d'intersection ϑ_{2R} se situe dans une plage de 50 degrés à 90 degrés ; et
l'angle d'intersection ϑ_{1N} se situe dans une plage de 80 degrés à 120 degrés et
l'angle d'intersection ϑ_{2N} se situe dans une plage de 110 degrés à 170 degrés.

4. Dispositif d'éclairage selon la revendication 1 satisfaisant à l'exigence (III) ci-dessus, dans lequel ;
l'angle d'intersection ϑ_{2R} se situe dans une plage de 5 degrés à 40 degrés ;
l'angle d'intersection ϑ_{1R} se situe dans une plage de 50 degrés à 90 degrés ;
l'angle d'intersection ϑ_{2N} se situe dans une plage de 80 degrés à 120 degrés ; et
l'angle d'intersection ϑ_{1N} se situe dans une plage de 110 degrés à 170 degrés.
